# FASCICULE DE BREVET EUROPEEN

(11) **EP 4 323 206 B1**
(45) Date de publication et mention de la délivrance du brevet: **13.08.2025**
(21) Numéro de dépôt: 22718752.3
(22) Date de dépôt: 04.04.2022
(51) Int. Cl.: B60C 15/024, B60C 15/06, B60C 1/00

(54) **PNEUMATIQUE POUR VÉHICULE DE TOURISME**
REIFEN FÜR PERSONENKRAFTWAGEN
TYRE FOR PASSENGER VEHICLE

(30) Priorité: 12.04.2021 FR 2103760
(43) Date de publication de la demande: 21.02.2024
(73) Titulaire: COMPAGNIE GENERALE DES ETABLISSEMENTS MICHELIN, 63000 Clermont-Ferrand (FR)
(72) Inventeur: GANDER, Sophie, 63040 CLERMONT-FERRAND Cedex 9 (FR); ROTY, Gael, 63040 CLERMONT-FERRAND Cedex 9 (FR)
(74) Mandataire: M.F.P. Michelin
(86) Numéro de dépôt international: PCT/FR2022/050622
(87) Numéro de publication internationale: WO 2022/219261

(56) Documents cités:
- WO-A1-2010/072736
- WO-A1-2019/106248
- JP-A- H11 157 311

## Description

### Domaine de l'invention

La présente invention concerne un pneumatique pour véhicule automobile dont les performances en résistance au roulement sont améliorées sans dégrader la rigidité de dérive transversale. L'invention est plus particulièrement adaptée pour un pneumatique radial destiné à équiper un véhicule de tourisme ou une camionnette.

### Définitions

Par convention, on considère un repère (O, XX', YY', ZZ'), dont le centre O coïncide avec le centre du pneumatique, les directions circonférentielles XX', axiale YY', et radiale ZZ' désignent respectivement une direction tangente à la surface de roulement du pneumatique selon le sens de rotation, une direction parallèle à l'axe de rotation du pneumatique, et une direction orthogonale à l'axe de rotation du pneumatique.

Par radialement intérieur, respectivement radialement extérieur, on entend plus proche, respectivement plus éloigné de l'axe de rotation du pneumatique.

Par axialement intérieur, respectivement axialement extérieur, on entend plus proche, respectivement plus éloigné du plan équatorial du pneumatique, le plan équatorial du pneumatique étant le plan passant par le milieu de la bande de roulement du pneumatique et perpendiculaire à l'axe de rotation du pneumatique.

La constitution du pneumatique est usuellement décrite par une représentation de ses constituants dans un plan méridien, c'est-à-dire un plan contenant l'axe de rotation du pneumatique.

Un pneumatique comprend un sommet, destinée à venir en contact avec un sol par l'intermédiaire d'une bande de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de sommet d'un pneumatique radial comprend une superposition de couches de sommet s'étendant circonférentiellement, radialement à l'extérieur de l'armature de carcasse. Chaque couche de sommet est constituée de renforts parallèles entre eux et enrobés par un matériau polymérique de type élastomère ou mélange élastomérique. L'ensemble constitué par l'armature de sommet et la bande de roulement est appelé sommet.

L'armature de carcasse d'un pneumatique radial comprend habituellement au moins une couche de carcasse constituée d'éléments de renforcement métalliques ou textiles enrobés dans un mélange élastomérique d'enrobage. Les éléments de renforcement sont sensiblement parallèles entre eux et font, avec la direction circonférentielle, un angle compris entre 85° et 95°. La couche de carcasse comprend une partie principale, reliant les deux bourrelets entre eux et s'enroulant, dans chaque bourrelet, autour d'une structure annulaire de renforcement. La structure annulaire de renforcement peut être une tringle qui comprend un élément de renforcement circonférentiel le plus souvent métallique entouré d'au moins un matériau, de manière non exhaustive, élastomérique ou textile. L'enroulement de la couche de carcasse autour de la structure annulaire va de l'intérieur vers l'extérieur du pneumatique pour former un retournement, comprenant une extrémité. Le retournement, dans chaque bourrelet, permet l'ancrage de la couche d'armature de carcasse à la structure annulaire du bourrelet.

Chaque bourrelet comprend une couche de bourrage prolongeant radialement vers l'extérieur la structure annulaire de renforcement. La couche de bourrage est constituée d'au moins un mélange élastomérique de bourrage. La couche de bourrage sépare axialement la partie principale et le retournement de l'armature de carcasse.

Chaque bourrelet comprend également une couche de protection prolongeant radialement vers l'intérieur le flanc et axialement extérieur au retournement. La couche de protection est également au moins en partie en contact par sa face axialement extérieure avec un crochet de la jante. La couche de protection est constituée d'au moins un mélange élastomérique de protection.

Chaque bourrelet comprend enfin une couche latérale de renforcement positionnée entre flanc et le retournement de l'armature de carcasse. La couche latérale de renforcement extérieure est constituée d'au moins un mélange élastomérique.

Chaque flanc de pneumatique comprend au moins une couche de flanc constituée par un mélange élastomérique et s'étendant axialement vers l'intérieur du pneumatique à partir d'une face extérieure du pneumatique, en contact avec l'air atmosphérique.

Par « coupe radiale » ou « section radiale » on entend ici une coupe ou une section selon un plan qui contient l'axe de rotation du pneumatique.

Par mélange élastomérique, on entend un matériau élastomérique obtenu par mélangeage de ses divers constituants. Un mélange élastomérique comprend classiquement une matrice élastomérique avec au moins un élastomère diénique de type caoutchouc naturel ou synthétique, au moins une charge renforçante de type noir de carbone et/ou de type silice, un système de réticulation le plus souvent à base de soufre, et des agents de protection. Pour certaines applications, les élastomères considérés peuvent également comprendre des thermoplastiques (TPE).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par l'expression « partie en poids pour cent parties en poids d'élastomère » (ou pce), il faut entendre au sens de la présente invention, la part, en masse pour cent parties d'élastomère présent dans la composition de mélange considérée.

Un mélange élastomérique peut être caractérisé mécaniquement, en particulier après cuisson, par ses propriétés dynamiques, telles qu'un module de cisaillement dynamique G*= (G'2+G''2)1/2, où G' est le module de cisaillement élastique et G'' le module de cisaillement visqueux, et une perte dynamique Tanδ=G''/G'. Le module de cisaillement dynamique G* et la perte dynamique Tanδ sont mesurés sur un viscoanalyseur de type Metravib VA4000, selon la norme ASTM D 5992-96. On enregistre la réponse d'un échantillon de mélange élastomérique vulcanisé ayant la forme d'une éprouvette cylindrique de 4 mm d'épaisseur et de 400 mm² de section, soumis à une sollicitation sinusoïdale en cisaillement simple alterné, à la fréquence de 10Hz, à une température de 100°C. On effectue avec un balayage en amplitude de déformation de 0,1% à 50% (cycle aller), puis de 50% à 0,1% (cycle retour). Pour le cycle aller, on indique la valeur maximale de tan(δ) observée, noté Tan(δ)ₘₐₓ.

La performance "comportement" correspond aux réponses d'un ensemble véhicule/pneu à des sollicitations multiples du conducteur (braquage, accélération, freinage...). Le comportement est à la fois essentiel en termes de sécurité pour la stabilité du véhicule mais également pour l'agrément de conduite.

Le pneu joue un rôle clé dans le comportement routier car il assure, en bout de chaîne, la transmission des efforts entre le véhicule et le sol afin de maintenir la trajectoire définie par le conducteur.

En virage, pour que le véhicule reste sur une trajectoire, il faut générer une force équivalente (mais de sens opposé) à la force centrifuge qui tend à éjecter le véhicule de la trajectoire. Cette force latérale doit être générée par les 4 pneus du véhicule pour vaincre la force centrifuge.

La déformation des pains de gomme en contact avec le sol génère un effort latéral. Le mécanisme qui permet au pneu de déformer les pains de gomme en virage est la mise en dérive. La dérive est l'angle entre la direction de la roue et la trajectoire suivie par le véhicule. En virage, cet angle n'est pas nul afin de permettre au pneumatique de déformer les pains de gomme de la bande de roulement et ainsi de générer les efforts latéraux nécessaires.

On appelle rigidité de dérive transversale la variation des efforts transversaux générés dans l'aire de contact du pneumatique en mouvement écrasé par la charge portée, en fonction de l'angle de dérive appliqué au pneumatique. La rigidité de dérive transversale s'exprime en Newton par degré (N/°).

Pour de faibles angles de dérive, c'est-à-dire des angles inférieurs à 10°, l'effort transversal, de direction parallèle à l'axe de rotation du pneumatique est proportionnel à l'angle de dérive. La rigidité de dérive transversale est égale à ce coefficient de proportionnalité.

La rigidité de dérive transversale est une grandeur physique essentielle qui relie le pneumatique au véhicule et détermine la qualité du comportement du véhicule sur route.

La résistance au roulement est une autre performance traitée dans l'invention. La résistance au roulement est l'une des forces qui s'opposent à l'avancement du véhicule. Le coefficient de Résistance au Roulement d'un pneumatique (C_{RR}), c'est la force de résistance au roulement ramenée à la charge portée par le pneumatique. Le coefficient est exprimé en kg/t.

La résistance au roulement est liée essentiellement à la déformation du pneumatique. A titre d'illustration, les bourrelets associés aux flancs représentent de 20% à 30% de la résistance au roulement du pneumatique, alors que la bande de roulement contribue à hauteur de 60% à 80%.

Le plus souvent dans l'invention, le pneumatique apparaît monté sur une jante. Ladite jante est choisie selon les spécifications de la norme l'ETRTO (Organisation Européenne Technique des Pneumatiques et des jantes) qui à une dimension pneumatique donnée associe des jantes recommandées. En générale, plusieurs largeurs jantes peuvent convenir à une même dimension pneumatique. La partie de la jante qui interagit avec le pneumatique dans le cadre de l'invention est axisymétrique par rapport à l'axe de rotation du pneumatique. Pour décrire la jante, il suffit de décrire le profil générateur dans un plan méridien.

Dans un plan méridien, la jante comprend au moins un crochet situé à une extrémité axiale, et relié à un siège qui est destiné à recevoir une face du bourrelet située le plus radialement intérieurement. Entre le siège et le crochet, prend place une portion rectiligne qui relie le crochet de jante au siège par des congés de raccords. Le crochet de la jante prolongée par la portion rectiligne limite axialement le déplacement des bourrelets lors du gonflage.

La montabilité des bourrelets sur une jante lors du gonflage est aussi une performance impactée par l'invention. La performance montabilité des bourrelets consiste à évaluer l'aptitude des bourrelets d'un pneumatique à s'installer correctement sur une jante lors de du gonflage. Sur la face radialement la plus intérieure du bourrelet, le contact avec le siège doit être suffisant pour éviter toute fuite de l'air de gonflage du pneumatique. En général, une pression de contact d'au moins 1.4 MPa est attendue dans cette zone de contact. La pression de gonflage vient coincer le bourrelet contre le crochet de la jante. Là encore la pression de contact sur le crochet doit être suffisant pour éviter le déjantage du pneumatique notamment dans les virages sévères à vitesse élevée. Des moyens d'observation, notamment radiographiques, des bourrelets montés sur une jante permettent de diagnostiquer la qualité du montage.

Il est donc possible de classer deux pneumatiques par rapport à leur performance de montabilité sur jante.

### Technique antérieure

La réduction des émissions de gaz à effet de serre des transports est un des défis majeurs devant lequel se trouvent les constructeurs de véhicules aujourd'hui. Le pneumatique constitue une source importante de progrès, par le biais d'un abaissement de la résistance au roulement, car celle-ci a un impact direct sur la consommation de carburant du véhicule. A titre d'illustration, une baisse de 20% de la résistance au roulement d'un pneumatique permet d'économiser environ 3% de carburant aux 100 km en cycle mixte.

Il existe encore un besoin de réduire la résistance au roulement des pneumatiques tourisme sans dégrader leur comportement sur véhicule.

Il déjà a été proposé d'améliorer la résistance au roulement des pneumatiques pour véhicules de tourisme en optimisant leurs bourrelets. Le document WO 2010/072736 enseigne notamment d'utiliser des compositions élastomériques ayant de faibles modules de cisaillament élastiques G' autour 15MPa et des modules de cisaillement visqueux G'' inférieurs de plus de 20% aux modules de cisaillement élastiques pour obtenir une baisse notable de la résistance au roulement.

Ce document préconise également de réduire encore davantage la résistance au roulement en optimisant la géométrie des couches de mélange élastomérique dont les modules de cisaillement élastique et visqueux vérifient la relation précédente. Cette optimisation conduit à des profils de couches de mélanges élastomériques plus court et plus large que dans des pneumatiques traditionnels, et peuvent entraîner des difficultés de mise en œuvre.

Le document FR2994127 décrit un perfectionnement du document WO 2010/072736, en proposant d'ajouter une armature de renforcement dans les bourrelets. L'armature de renforcement est formée de renforts enrobés dans un mélange élastomérique.

L'inconvénient majeure de cette solution est une dégradation significative du coût de revient industriel avec l'introduction de nouveaux semi-finis dans le processus de fabrication du pneumatique.

Les inventeurs se sont donnés pour objectif de réaliser un pneumatique qui améliore le niveau de résistance au roulement sans dégrader le comportement du véhicule, et tout en maîtrisant les coûts de fabrication afférents.

### Exposé de l'invention

Ce but a été atteint par un pneumatique pour véhicule de tourisme comprenant :
deux bourrelets destinés à être montés sur une jante, deux couches de flancs reliés aux bourrelets, un sommet comportant une bande de roulement destinée à entrer en contact avec un sol, le sommet ayant un premier côté relié à l'extrémité radialement extérieure de l'un des deux couches de flancs et ayant un deuxième côté relié à l'extrémité radialement extérieure de l'autre des deux couches de flancs;
au moins une armature de carcasse s'étendant depuis les deux bourrelets à travers les couches de flancs jusqu'au sommet, l'armature de carcasse comportant une pluralité d'éléments de renforcement de carcasse et étant ancrée dans les deux bourrelets par un retournement autour d'une structure annulaire de renforcement, de manière à former dans chaque bourrelet une partie principale et un retournement;
une première couche de mélange élastomérique de bourrage occupant un volume compris au moins en partie d'une part entre la partie principale de l'armature de carcasse , et d'autre part la portion radialement extérieure de structure annulaire de renforcement, et s'étendant radialement extérieurement jusqu' à une extrémité située à une distance normale DRB à la droite axiale HH' tangente à la structure annulaire de renforcement en son point radialement le plus intérieur;
une deuxième couche de mélange élastomérique formant une couche latérale de renforcement occupant un volume compris au moins en partie entre la couche de flanc, et le retournement de l'armature de carcasse, s'étendant radialement extérieurement jusqu'à une extrémité située à une distance normale DRL à la droite axiale HH' tangente à la structure annulaire de renforcement en son point radialement le plus intérieur;
un module de cisaillement élastique et une perte viscoélastique des mélanges élastomériques étant mesurées selon la norme ASTM D 5992-96, à 100°C, sous 10% de déformation ;
dans chaque bourrelet une courbe de contact jante comprenant les points du pneumatique en contact avec la j ante, ladite courbe de contact jante reliant un premier point M1 du pneumatique axialement positionné le plus extérieurement, et en contact avec la jante, et un deuxième point M2 du pneumatique également en contact avec la jante et situé au milieu de la portion rectiligne reliant le crochet au siège de la jante; la longueur de ladite courbe de contact jante étant la distance curviligne du point M1 au point M2 le long de la courbe de contact jante ;
deux sections dans une coupe méridienne verticale du pneumatique gonflé, monté sur une jante, et écrasé sur un sol plan dur par une charge verticale où la charge, la pression de gonflage sont à leur valeur nominale de la norme l'ETRTO (Organisation Européenne Technique des Pneumatiques et des jantes)_; une première section étant située dans l'aire de contact, et une deuxième section étant située du côté opposé à la précédente par rapport à l'axe de rotation du pneumatique ;
dans la première section située dans l'aire de contact, dans au moins un premier bourrelet, la longueur de la courbe de contact jante, LADC, étant mesurée;
dans la deuxième section située à l'opposé de l'aire de contact par rapport à l'axe de rotation du pneumatique, dans au moins un deuxième bourrelet, la longueur de la courbe de contact jante, LCJ, étant mesurée ;
le rapport de la différence des longueurs des courbes de contact jante des deux sections soit 100*(LADC-LCJ)/LCJ, est supérieur ou égal à 30 ;
la perte viscoélastique Tan (δ)max du mélange élastomérique constituant la couche latérale de renforcement d'au moins un bourrelet a une valeur inférieure ou égale à 0.100.

Le taux de variation de contact jante, 100*(LADC-LCJ)/LCJ des pneumatiques de l'invention supérieur à 30, combiné avec un niveau de l'hystérèse Tan(δ)max inférieure ou égale à 0.100 du mélange élastomérique constituant la couche latérale de renforcement conduisent à une baisse de la résistance au roulement du pneumatique sans dégrader le comportement routier du véhicule sur lequel il est monté. Le bourrelet d'un tel pneumatique réalise un équilibre des performances de résistance au roulement et de rigidité de dérive transversale grâce aux propriétés matérielles et au profil géométrique de la couche de flanc dans la zone de contact avec la jante. La fabrication d'un tel pneumatique ne nécessite pas d'évolution particulière des procédés, ni l'introduction de nouveaux matériaux, ce qui maintient le coût de revient industriel inchangé par rapport à l'état de l'art.

Le taux de variation de contact jante des pneumatiques de l'invention est très supérieur à celui constaté sur les pneumatiques de l'état de l'art.

La courbe de contact jante représente l'ensemble des points du pneumatique qui sont en contact avec la jante à un instant donné. Pour chacun des bourrelets, ladite courbe de contact jante s'étend depuis un premier point M1 du pneumatique axialement positionné le plus extérieurement, et en contact avec la j ante, et un deuxième point M2 du pneumatique également en contact avec la jante et situé au milieu de la portion rectiligne reliant le crochet au siège de la jante. La longueur de ladite courbe de contact jante est la distance curviligne du point M1 au point M2 le long de la courbe de contact jante.

Lorsque le pneumatique gonflé, monté sur une jante, est écrasé par une charge portée, les points du pneumatique en contact avec la jante peuvent varier d'un méridien à l'autre. Il s'ensuit que la longueur de la courbe de contact jante telle que définie précédemment varient également d'un méridien à l'autre.

Le pneumatique est conçu de manière à ce que la courbe de contact jante soit la plus longue possible dans l'aire de contact, en comparaison aux pneumatiques de l'état de l'art, et plus précisément dans le méridien au centre de l'aire de contact. Dans ces conditions, les inventeurs estiment que la contribution du contact jante à la rigidité de dérive est maximale.

Dans une coupe méridienne d'un pneumatique gonflé, monté sur une jante, et écrasé par la charge portée, on peut voir une première section du pneumatique qui passe par le centre de l'aire de contact. On entend par aire de contact l'ensemble des points du pneumatique, à un instant donné qui sont en contact avec le sol d'écrasement. On appelle centre de l'aire de contact le point de l'air de contact situé sur l'axe vertical ZZ'. On peut également voir à l'opposé de l'aire de contact par rapport à l'axe de rotation YY' du pneumatique une autre section du pneumatique qui globalement défini un état déformé assimilable à l'état du gonflage axisymétrique.

Le taux de variation du contact jante correspond à la valeur maximale de l'évolution des longueurs de contact jante au tour de roue.

Selon les inventeurs, une étape essentielle de la conception du pneumatique de l'invention consiste à modifier son profil extérieur dans la zone de contact avec la jante. Diverses solutions sont possibles comme par exemple, d'augmenter l'épaisseur axiale de la couche de flanc à la jonction avec la couche de protection. D'autres solutions consistent à modifier le profil extérieur de manière à obtenir un profil dans la zone de contact avec la même courbure que le crochet de jante. Une autre solution encore consiste à insérer un coussin de mélange dans la zone à la jonction des couches de flanc et de protection, au niveau du crochet de la jante. Ce coussin de mélange peut être constitué de préférence du même mélange que celui de la couche de flanc de manière à maintenir le coût de revient industriel. L'attendue vis-à-vis de ce coussin de mélange élastomérique est surtout son module de cisaillement élastique qui avantageusement pourrait être par exemple égal à celui de la couche de flanc.

Selon l'invention, la perte viscoélastique Tan (δ)max du mélange élastomérique constituant la couche latérale de renforcement d'au moins un bourrelet a une valeur inférieure ou égale à 0.100.

L'invention propose l'utilisation d'une couche latérale de renforcement avec une perte viscoélastique inférieure ou égale à 0.100 dans le but d'améliorer la résistance au roulement. Cette couche latérale de renforcement peut être associée à la première couche de mélange élastomérique de bourrage qui peut également avoir une basse perte viscoélastique, ou être rigide, ou encore être souple.

La couche latérale de renforcement a pour fonction dans le bourrelet de renforcer la première couche de mélange élastomérique de bourrage en rigidités de cisaillement. La transmission du couple véhicule à la roue nécessite d'avoir un bourrelet avec un niveau de rigidité suffisant pour être efficace. La couche latérale de renforcement contribue en collaborant avec la première couche de mélange élastomérique de bourrage à la rigidité du bourrelet.

La baisse de la résistance au roulement du bourrelet consiste à baisser l'hystérèse des mélanges élastomériques de plus grand volume, et subissant de fortes déformations. Les première et deuxième couches de mélange du bourrelet positionnées respectivement axialement intérieurement au retournement de l'armature de carcasse, et axialement extérieurement, sont ceux occupant le plus grand volume et subissant de fortes déformations de flexions, d'extension-compression et de cisaillements.

Dans un premier mode de réalisation avantageux, la couche latérale de renforcement d'au moins un bourrelet a un module de cisaillement élastique compris dans l'intervalle [1.5 ; 10] MPa, préférentiellement dans l'intervalle [1.5 ; 7] MPa.

Ce mode de réalisation vise à faire fonctionner le bourrelet avec une couche latérale de renforcement souple alors qu'usuellement la couche latérale de renforcement a un module de cisaillement élastique compris entre 20 MPa et 50 MPa. Ce mode de réalisation a l'avantage d'utiliser un mélange élastomérique avec à la fois une perte viscoélastique faible avec Tan (δ) max inférieur à 0.1, et en même temps au module de cisaillement élastique compris dans l'intervalle [1.5 ; 10] MPa. Un tel mélange ne présente pas de difficultés particulières pour être réalisé compte tenu de la cohérence de ces propriétés matériaux.

Dans un deuxième mode avantageux de réalisation de l'invention, la perte viscoélastique Tan (δ)max du mélange élastomérique constituant la première couche de mélange élastomérique de bourrage d'au moins un bourrelet a une valeur inférieure ou égale à 0.100.

Dans ce mode de réalisation, le compromis de performances penche du côté de la résistance au roulement. Le volume de cette première couche de mélange élastomérique de bourrage est le plus important du bourrelet. La baisse de son hystérèse combinée avec une couche latérale de renforcement de passe perte se traduit par une baisse notable de la résistance au roulement du bourrelet.

Autrement dit, ce mode de réalisation est favorable à la baisse de la résistance au roulement du bourrelet et donc du pneumatique tout en ayant un niveau de comportement routier sur véhicule comparable à un pneumatique de l'état de l'art grâce au taux de variation du contact jante qui reste à niveau supérieur à 30.

D'après un troisième mode de réalisation, le module de cisaillement élastique du mélange élastomérique constituant la première couche de mélange élastomérique de bourrage d'au moins un bourrelet est compris dans l'intervalle [1.5 ; 10] MPa, préférentiellement dans l'intervalle [1.5, ; 7] MPa.

Un autre avantage de l'invention lié à cette variante, est qu'en procédant à des tests de montabilité sur jante comparant des pneumatiques de l'état de l'art et de l'invention, les inventeurs ont remarqué que la montabilité des pneumatiques de l'invention est plus performante que certains pneumatiques comportant des bourrelets rigides. En effet, dans les pneumatiques de l'état de l'art, le mélange de la première couche de mélange élastomérique de bourrage ont un module de cisaillement élastique généralement compris entre 15 Mpa et 50 Mpa. Les inventeurs émettent l'hypothèse que la souplesse relative du bourrelet des pneumatiques de l'invention permet de faciliter le montage du fait de leur déformabilité qui favorise une meilleure installation sur le siège, et contre le crochet de jante. En outre, la modification du profil de la couche de flanc radialement intérieurement, associé à un bourrelet rigide entraîne un dévers de montabilité sur jante. L'utilisation de mélanges élastomériques souple (G'<lOMPa) permet de rattraper ce dévers et d'obtenir un niveau de montabilité convenable.

Préférentiellement, le rapport de la différence des longueurs des courbes de contact jante des deux sections soit 100*(LADC-LCJ)/LCJ, est supérieur ou égal à 40, préférentiellement supérieur ou égal à 50, encore préférentiellement supérieur ou égal à 70.

Les inventeurs ont constaté que la rigidité de dérive transversale du pneumatique de l'invention augmente dans le même sens que le taux de variation de contact jante. Pour de tels taux de variation du contact jante, la modification du profil extérieur de la couche de flanc facilite le montage du bourrelet, mais des taux trop élevés au-delà de 100, pourraient gêner la montabilité.

En complément aux caractéristiques principales de l'invention, les inventeurs ont identifié des leviers liés à la géométrie des couches de mélanges du bourrelet pour mieux gérer le compromis de performances du pneumatique avec une résistance au roulement améliorée tout en ayant un bon comportement routier.

Avantageusement, la distance radiale DRB de la première couche de mélange élastomérique de bourrage comprise entre la partie principale de l'armature de carcasse et de son retournement est inférieure ou égale à 50% de la hauteur radiale H du pneumatique.

La hauteur H du pneumatique est la distance normale entre une première droite parallèle à l'axe de rotation du pneumatique et tangente au point le plus radialement intérieur de la structure annulaire de renforcement, et entre une deuxième droite également parallèle à l'axe de rotation du pneumatique et passant par le point le plus radialement extérieur de la bande de roulement. La hauteur radiale H est mesurée sur le pneumatique monté sur une jante et gonflé avec une pression de consigne conforme aux spécifications ETRTO (Organisation Européenne pour les jantes et les pneumatiques).

Avantageusement, la distance radiale DRI étant la hauteur radiale d'une extrémité radialement la plus intérieure de la couche latérale de renforcement, positionnée entre la couche de flanc et le retournement de l'armature de carcasse, ladite distance radiale DRI est comprise dans l'intervalle [5% ; 25%] de la hauteur radiale H du pneumatique.

Avantageusement encore, la distance DRL étant la distance de l'extrémité radialement extérieure de la couche latérale de renforcement positionnée entre la couche de flanc et le retournement de l'armature de carcasse, ladite distance DRL est supérieure ou égale à 25% de la hauteur radiale H du pneumatique.

On rappelle que la distance DRL est la distance normale de l'extrémité radialement le plus extérieure de l'extrémité de la couche latérale de renforcement à la droite axiale (HH') tangente à la structure annulaire de renforcement en son point radialement le plus intérieur ;
La couche latérale de renforcement comprise entre le flanc et le retournement de l'armature de carcasse contribue à la rigidité du bourrelet en renfort à la première couche de mélange élastomérique de bourrage. Selon les inventeurs, son positionnement est ajusté par les côtes DRI et DRL de manière à résister aux sollicitations de flexions, d'extensions-compression du bourrelet lors du passage dans l'aire de contact.

Dans un mode avantageux de réalisation de l'invention, le retournement de l'armature de carcasse est en contact avec la partie principale de l'armature de carcasse radialement extérieurement le long dudit retournement.

Comme dit plus haut, l'armature de carcasse est formée de renforts enrobés entre deux couches de mélanges élastomériques. Le retournement de l'armature de carcasse est plaqué contre la partie principale de l'armature de carcasse signifie que le retournement est en contact avec la branche principale de l'armature de carcasse. Le contact s'effectue selon une surface axialement extérieure de l'enrobage de l'armature de carcasse.

Dans cette configuration, le volume de la première couche de mélange élastomérique de bourrage est limité au strict minimum autour de la structure annulaire de renforcement. Cette configuration est très avantageuse pour la baisse de la résistance au roulement du bourrelet.

Dans un autre mode de réalisation, une armature de renforcement du bourrelet est introduite axialement entre le retournement de l'armature de carasse, et la couche latérale de renforcement axialement intérieure au flanc.

L'armature de renforcement du bourrelet est formée de renforts parallèles entre eux, et enrobés entre deux couches de mélanges élastomériques. L'ajout de ce semi-fini entraîne un surcoût de la fabrication qu'il convient de compenser.

Afin de limiter l'impact sur le coût de revient d'une telle solution, ce mode de réalisation peut être combiné avec le plaquage du retournement de l'armature de carcasse contre la partie principale de l'armature de carcasse.

Avantageusement, au moins une couche de la première couche de mélange élastomérique de bourrage et de la couche latérale de renforcement a une composition à base de 100% de polyisoprène de caoutchouc naturel, ou bien d'un coupage de caoutchouc naturel et de polybutadiène, d'un système de réticulation, d'une charge renforçante, type Noir de Carbone N550, à un taux global compris entre 50 et 75 pce.

Préférentiellement, le mélange élastomérique constitutif de la première couche de mélange élastomérique de bourrage d'au moins un bourrelet a la même composition que le mélange élastomérique constituant la couche latérale de renforcement extérieure dudit bourrelet.

La composition caoutchouteuse est préférentiellement à base d'au moins un élastomère diénique, une charge renforçante et un système de réticulation.

Par élastomère (ou indistinctement caoutchouc) « diénique », on entend de manière connue un élastomère issu au moins en partie (i.e., un homopolymère ou un copolymère) de monomères diènes c'est-à-dire de monomères porteurs de deux doubles liaisons carbone-carbone, conjuguées ou non. L'élastomère diénique utilisé est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène styrène (SIR), les copolymères de butadiène-styrène-isoprène (SBIR) et les compositions de ces élastomères.

Un mode de réalisation préférentiel consiste à utiliser un élastomère « isoprénique », c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les compositions de ces élastomères.

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon d'autres modes de réalisation préférentiels, l'élastomère diénique peut être constitué, en tout ou partie, d'un autre élastomère diénique tel que, par exemple, un élastomère SBR (E-SBR ou S-SBR) utilisé en coupage ou non avec un autre élastomère, par exemple du type BR.

La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou des charges inorganiques comme la silice, des agents de couplage pour charge inorganique, des agents anti-vieillissement, des antioxydants, des agents plastifiants ou des huiles d'extension, que ces derniers soient de nature aromatique ou non aromatique (notamment des huiles très faiblement ou non aromatiques, par exemple du type naphténiques ou paraffiniques, à haute ou de préférence à basse viscosité, des huiles MES ou TDAE, des résines plastifiantes à haute Tg supérieure à 30°C), des agents facilitant la mise en œuvre (processabilité) des compositions à l'état cru, des résines tackifiantes, un système de réticulation à base soit de soufre, soit de donneurs de soufre et/ou de peroxyde, des accélérateurs, des activateurs ou retardateurs de vulcanisation, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt ou de nickel.

Les compositions sont fabriquées dans des mélangeurs appropriés, en utilisant deux phases de préparation successives bien connues de l'homme du métier : une première phase de travail ou malaxage thermomécanique (phase dite « non productive ») à haute température, jusqu'à une température maximale comprise entre 110°C et 190°C, de préférence entre 130°C et 180°C, suivie d'une seconde phase de travail mécanique (phase dite « productive ») jusqu'à une plus basse température, typiquement inférieure à 110°C, phase de finition au cours de laquelle est incorporé le système de réticulation.

A titre d'exemple, la phase non productive est conduite en une seule étape thermomécanique de quelques minutes (par exemple entre 2 et 10 min) au cours de laquelle on introduit, dans un mélangeur approprié tel qu'un mélangeur interne usuel, tous les constituants de base nécessaires et autres additifs, à l'exception du système de réticulation ou vulcanisation. Après refroidissement de la composition ainsi obtenue, on incorpore alors dans un mélangeur externe tel qu'un mélangeur à cylindres, maintenu à basse température (par exemple entre 30°C et 100°C), le système de vulcanisation. L'ensemble est alors mélangé (phase productive) pendant quelques minutes (par exemple entre 5 et 15 min).

La composition finale ainsi obtenue est ensuite calandrée, par exemple sous la forme d'une feuille ou plaque pour caractérisation, ou encore extrudée, pour former la bande extérieure utilisée dans un pneumatique selon l'invention.

La vulcanisation (ou cuisson) peut ensuite être conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

### Brève description des dessins

D'autres détails et caractéristiques avantageux de l'invention ressortiront ci-après de la description des exemples de réalisation de l'invention en référence aux figures qui représente des vues méridiennes de schémas d'un pneumatique selon un mode de réalisation de l'invention. Les figures ne sont pas représentées à l'échelle pour en simplifier la compréhension.
La figure 1 représente une coupe méridienne du pneumatique gonflé, monté sur une jante et écrasé par la charge portée. On voit une première section dans l'aire de contact et une deuxième section opposée à l'aire de contact par rapport à l'axe (YY').
Les figures 2-A et 2-B montrent des modifications du profil extérieur du pneumatique pour faciliter le contact avec la jante.
La figure 2-C représente un grossissement d'un bourrelet d'un pneumatique de l'invention installé sur une jante.
La figure 3-A illustre la détermination de la hauteur H d'un pneumatique.
La figure 3-B représente la visualisation des principales côtes du bourrelet en lien avec l'invention.

### Description détaillée de l'invention

L'invention a été mise en œuvre sur un pneumatique tourisme de dimension 245/45R18, selon la norme de spécifications de l'ETRTO (Organisation Technique Européenne des jantes et Pneumatiques). Un tel pneumatique peut porter une charge de 800 kilos, gonflé à une pression de 250 kPa.

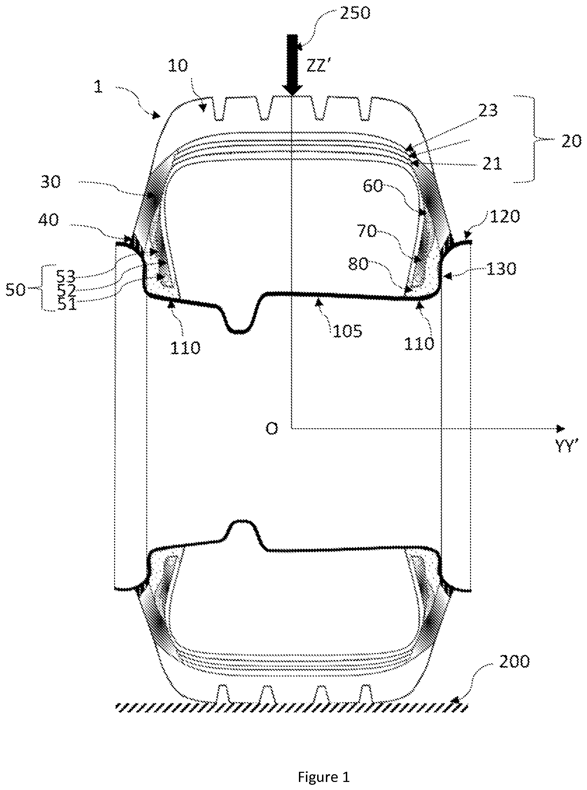

Sur la figure 1, le pneumatique 1 comprend une armature de carcasse 90 constituée de renforts enrobés de composition caoutchouteuse, et deux bourrelets 50 comportant chacun des structures annulaires de renforcement 51 qui maintiennent le pneumatique 1 sur la jante 100. L'armature de carcasse 90 est ancrée dans chacun des bourrelets 50. Le pneumatique 1 comporte en outre une armature de sommet 20 comprenant deux couches de travail 21, 22, et une couche de frettage 23. Chacune des couches de travail 21 et 22 est renforcée par des éléments de renforcement filaires qui sont parallèles dans chaque couche et croisés d'une couche à l'autre, en faisant avec la direction circonférentielle des angles compris entre 10° et 70°. La couche de frettage 23, disposée radialement à l'extérieur de l'armature de sommet 20, cette couche de frettage 23 étant formée d'éléments de renforcement orientés circonférentiellement et enroulés en spirale. Une bande de roulement 10 est posée radialement sur la couche de frettage 23; c'est cette bande de roulement 10 qui assure le contact du pneumatique 1 avec un sol 200. Le pneumatique 1 représenté est un pneu « tubeless » : il comprend une « gomme intérieure » 95 en composition caoutchouteuse imperméable au gaz de gonflage, recouvrant la surface intérieure du pneumatique. Le pneumatique est écrasé sur un sol 200 par une charge verticale 250. Chaque bourrelet 50 comprend une couche de mélange élastomérique 80 positionnée radialement le plus intérieurement et destinée à être en contact avec la jante 100, une première couche de mélange élastomérique de bourrage 70, positionnée au moins en partie entre la partie principale 52 de l'armature de carcasse 90 et le retournement 53. Le bourrelet 50 comprend aussi une couche latérale de renforcement 60 axialement extérieure au retournement 53 et axialement intérieure au flanc 30.

Toujours sur la figure 1, la jante de montage 100 s'étend axialement de part et d'autre de l'axe verticale OZ et comprend au moins un profil 105 comportant sur au moins une partie délimitée par l'axe OZ, un siège 110 destiné à recevoir le talon du pneumatique, ledit siège 110 est relié à une portion rectiligne 130 de la jante, portion rectiligne 130 qui est elle-même reliée au crochet 120.

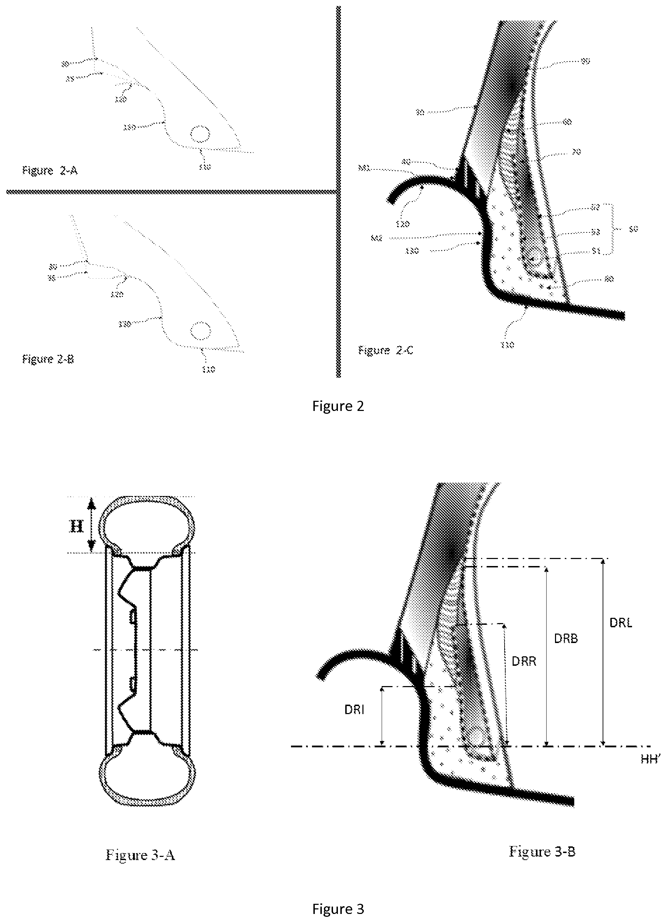

Sur la figure 2-A, on a représenté les profils extérieurs d'un bourrelet 50 d'un pneumatique 1 de l'invention en comparaison à celui d'un pneumatique de l'état de l'art. Le bourrelet 50 est représenté dans une section opposée à l'aire de contact. Les deux profils se différencient dans une zone au niveau du crochet de jante 120. La référence 30 indique le profil d'un pneumatique de l'état de l'art, et la référence 35 montre la modification du profil opérée sur le pneumatique de l'invention pour faciliter le contact avec la jante 100.

Sur la figure 2-B, nous avons la même représentation que sur la figure 2-A, mais sauf que les profils sont montrés au centre de l'aire de contact avec le sol. Le pneumatique est en contact avec tout le crochet de jante 120 contrairement à la figure 2-A. Le taux de variation de contact jante traduit cette évolution du contact j ante.

Dans le mode de réalisation représentée sur la figure 2-C, on trouve un coussin de mélange élastomérique 40 (modification située à l'extrémité radialement intérieure du flanc 30), destiné à être en contact avec le crochet de jante 120. Le coussin de mélange 40 est délimité radialement intérieurement par une courbe qui épouse le profil du crochet de jante 120. Un premier côté du coussin de mélange élastomérique 40 a une forme géométrique appropriée qui anticipe le contact avec la courbure du crochet de jante de manière à épouser la forme du crochet de jante 120 lors du contact, un deuxième côté du coussin de mélange élastomérique prolonge un côté extérieur d'un flanc en contact avec l'air ambiant, un troisième côté du coussin de mélange élastomérique 40 est en contact avec l'extrémité radialement intérieure du flanc et enfin un quatrième côté du coussin de mélange élastomérique est en contact avec la couche de protection 80.

Sur la figure 2-C la courbe de contact jante s'étend depuis un premier point M1 du pneumatique axialement positionné le plus extérieurement, et en contact avec la jante, et un deuxième point M2 du pneumatique également en contact avec la jante et situé au milieu de la portion rectiligne reliant le crochet 120 au 110 siège de la jante. La longueur de ladite courbe de contact jante est la distance curviligne du point M1 au point M2 le long de la courbe de contact jante.

Sur la figure 3-A, la détermination de la hauteur H est illustrée. La hauteur H du pneumatique est la distance normale entre une première droite parallèle à l'axe de rotation du pneumatique et tangente au point le plus radialement intérieur de la structure annulaire de renforcement, et entre une deuxième droite également parallèle à l'axe de rotation du pneumatique et passant par le point le plus radialement extérieur de la bande de roulement. La hauteur radiale H est mesurée sur le pneumatique monté sur une jante et gonflé avec une pression de consigne conforme aux spécifications ETRTO (Organisation Européenne pour les jantes et les pneumatiques).

Sur la figure 3-B on a représenté les paramètres géométriques du bourrelet en lien avec l'invention. Les hauteurs sont définies à partir de la droite HH', qui est tangente à la tringle 51 en son point radialement le plus intérieur :
DRI est la distance radiale par rapport à HH' de l'extrémité radialement intérieure de la couche latérale de renforcement 60. La distance radiale DRI est inférieure ou égale à 20% de la hauteur radiale H du pneumatique, et vaut 5mm dans l'exemple présenté ici ;
DRL est la distance radiale par rapport à la droite HH' de l'extrémité radialement extérieure de la couche latérale de renforcement 60. La distance radiale DRL est supérieure ou égale à 25% de la hauteur radiale H du pneumatique et vaut 38 mm dans l'exemple présenté ici;
DRR est la distance radiale par rapport à HH' de l'extrémité du retournement de l'armature de carcasse 90. La distance radiale DRR étant supérieure ou égale à 10% de la hauteur radiale H du pneumatique et vaut 20 mm dans l'exemple présenté ici ;
DRB est la distance radiale par rapport à HH' de l'extrémité radialement extérieure de la première couche de mélange élastomérique de bourrage 70, et vaut 28 mm dans l'exemple présenté ici.

Le tableau n°1 qui suit donne les compositions de mélanges élastomériques d'un bourrelet concerné par l'invention. Les principaux mélanges utilisés sont listés en exprimant pour chacun les principaux ingrédients exprimés en pce (partie en poids pour cent parties en poids d'élastomère) :

**[Tableau 1]**

| | Elastomère NR (Caoutchouc naturel) | Charge renforçante noir de carbone | Agent antioxydant | Soufre | Accélérateur | Résine renforçante | Durcisseur |
|---|---|---|---|---|---|---|---|
| M1 | 100 | 75 (N326) | 1.5 | 8.5 | 0.95 | 12 | 4.18 |
| M2 | 100 | 75 (N326) | 2 | 7.5 | 0.97 | 12 | 6.8 |
| M3 | 100 | 55 (N550) | 1.3 | 9.0 | 0.68 | 0 | 0 |

Les mélanges de l'invention utilisés dans cet exemple sont à base d'un élastomère de caoutchouc naturel, renforcés par du noir de carbone. Des plastifiants (résine renforçante) entrent dans la composition pour faciliter la processabilité des mélanges. Les mélanges comprennent aussi des agents de vulcanisation, soufre, accélérateur, et des agents de protection. Les propriétés mécaniques et viscoélastiques associées, mesurées à 23°C sous une amplitude de déformation de 10% sont résumées dans le tableau n°2 :

**[Tableau 2]**

| | G' | G" | Tan (δ)max |
|---|---|---|---|
| M1 | 46 | 7 | 0.2 |
| M2 | 48 | 8 | 0.2 |
| M3 | 3 | 0.3 | 0.1 |

Dans le contexte de l'invention, les mélanges élastomériques M1 et M2 avec un module de cisaillement élastique respectivement de 46 MPa et de 48 MPa sont dits rigides. Le mélange M3 avec une perte viscoélastique égale à 0.1 est dit de basse hystérèse.

Une configuration P1 du pneumatique de l'invention a été testée pour bien mettre en exergue les performances apportées par l'invention.

### Les résultats de ces pneumatiques sont comparés à ceux de témoins T1, T2, et T3

Le témoin T1 correspond à un pneumatique de conception usuelle comprenant une première couche de mélange élastomérique de bourrage située entre la partie principale de l'armature de carcasse, et de son retournement. Cette première couche de mélange élastomérique de bourrage est constituée du mélange M1. Ce pneumatique comprend également une couche latérale de renforcement positionnée entre la couche de flanc et le retournement de l'armature de carcasse. Cette couche latérale de renforcement est dotée du mélange élastomérique M2. Le profil de la couche de flanc n'a pas été modifié pour faciliter le contact avec la jante comme c'est le cas pour les pneumatiques de l'invention.

Le taux de variation du contact jante sur le pneumatique témoin T1 est par convention positionné à 100, c'est-à-dire que ledit taux de variation de contact avec la jante a un écart par rapport à un pneumatique de l'invention inférieur à 30.

Pour la configuration T2, la couche de bourrage, et la couche latérale de renforcement sont constituées du même mélange élastomérique M3, mais le profil du flanc, contrairement aux pneumatiques de l'invention n'a pas été modifié pour faciliter le contact avec la jante.

Quant à la deuxième variante T3, la première couche de mélange élastomérique de bourrage est constituée du mélange M1, et la couche latérale de renforcement est dotée du mélange élastomérique M2. Le profil du flanc, cette fois-ci a été modifié pour faciliter le contact avec la jante, conformément aux figures 2-A et 2-B.

Une variante de pneumatique P1 conforme à l'invention reprend les spécifications du témoin T1, avec le remplacement du mélange de la deuxième couche de bourrage par le mélange M3. Le taux de variation de contact jante est de 167 après une modification partielle du profil de la couche de flanc dans la zone du contact avec la jante, comme représenté sur les figures 2-A et 2-B.

Les pneumatiques témoins, et la configuration conforme à l'invention ont été testés pour la mesure de la résistance au roulement, et de la rigidité de dérive transversale. Ces mêmes pneumatiques ont également été évalués au test de montabilité sur jante.

. Le tableau N°3 ci-dessous synthétise les configurations considérées :

**[Tableau 3]**

| | Première couche de bourrage | Couche latérale de renforcement | Modification du Profil du contact avec la jante |
|---|---|---|---|
| T1 | M1 | M2 | nok⁽¹⁾ |
| T2 | M3 | M3 | nok⁽¹⁾ |
| T3 | M1 | M2 | ok |
| P1 | M1 | M3 | ok |

| | | | |
|---|---|---|---|
| (1) Le qualificatif Nok signifie que le profil de la couche de flanc n'a pas été modifié pour faciliter le contact avec la jante et ok signifie que ledit profil a été modifié de manière à obtenir un taux de variation de contact jante supérieur à 30. | | | |

**Le** test de résistance au roulement a été opéré selon la norme ISO 28580. Pour un pneumatique testé, le résultat est le coefficient de résistance au roulement qui représente le rapport de la force de résistance à l'avancée du véhicule par hystérèse des pneumatiques divisé par la charge portée.

Les mesures de rigidité de dérive transversales ont été faites sur des machines de mesures dédiées comme par exemple celles commercialisées par la société MTS.

**Le** test de montabilité sur jante consiste à donner un résultat sur la montabilité globale à partir de la décomposition d'un montage en opérations élémentaires qui comprennent notamment : le passage des crochets de jante, la prise de pression, le franchissement des humps de la jante, la mise en place du bourrelet par compression, l'étanchéité sous le siège de jante, le détalonnage et le démontage. Pour réaliser ce test des moyens sont nécessaires comme par exemple une machine de montage semi-automatique, ou encore des moyens radiographiques.

Les résultats obtenus sont synthétisés dans le tableau n°4 suivant, où figurent également le taux de variation de contact jante pour chaque variante :

**[Tableau 4]**

| | Résistance au roulement | Rigidité de dérive transversale | Taux de variation de contact jante | Montabilité Jante |
|---|---|---|---|---|
| T1 | 100 | 100 | 100 | 100 |
| T2 | 108 | 97 | 112 | 110 |
| T3 | 96 | 103 | 160 | 95 |
| P1 | 105 | 99 | 167 | 105 |

**En** observant les résultats des pneumatiques le principe d'utiliser un bourrelet avec des matériaux souples, comme par exemple le mélange M3, pour baisser la résistance au roulement du pneumatique est confirmé (T2). En revanche, une baisse concomitante de la rigidité de dérive est également observable.

Inversement ces mêmes résultats nous enseignent que quand on utilise un bourrelet rigide c'est-à-dire un bourrelet avec une première couche de mélange élastomérique de bourrage et une couche latérale de renforcement constituées respectivement avec les mélanges élastomériques (M1, M2) la résistance au roulement se dégrade significativement.

Le témoin T3 nous enseigne que la modification du profil de la couche de flanc pour faciliter le contact jante associée à un bourrelet rigide améliore la rigidité de dérive transversale, mais dégrade la montabilité sur jante.

La variante P1 montre un gain en résistance au roulement. La rigidité de dérive transversale est affectée à la baisse. Le taux de variation de contact jante est à un niveau permettant de limiter la baisse de rigidité de dérive transversale. La souplesse relative du bourrelet liée à la baisse du module de cisaillement élastique du mélange M3 de la première couche de mélange élastomérique de bourrage facilite la montabilité sur jante.

La variante P1 a un niveau de rigidité de dérive transversale à peu près identique au témoin. Par des simulations numériques, il est confirmé que le comportement routier de ces variantes donne des résultants identiques au témoin.

Toutes les variantes présentées sont produites sans évolution des procédés et restent avec un coût de revient industriel peu différent aux coûts usuels.

Par ailleurs, l'invention peut se généraliser à d'autres architectures de bourrelet que celles décrites ici, comme par exemple un bourrelet ayant une première couche de mélange élastomérique de bourrage, et une couche latérale de renforcement, alors même que l'armature de carcasse ne comprend pas un retournement.

## Revendications

1. Pneumatique (1) pour véhicule de tourisme comprenant :
deux bourrelets (50) destinés à être montés sur une jante, deux couches de flancs (30) reliés aux bourrelets (50), un sommet (20) comportant une bande de roulement (10) destinée à entrer en contact avec un sol (200), le sommet (20) ayant un premier côté relié à l'extrémité radialement extérieure de l'un des deux couches de flancs (30) et ayant un deuxième côté relié à l'extrémité radialement extérieure de l'autre des deux couches de flancs (30) ;
au moins une armature de carcasse (90) s'étendant depuis les deux bourrelets (50) à travers les couches de flancs (30) jusqu'au sommet (20), l'armature de carcasse (90) comportant une pluralité d'éléments de renforcement de carcasse et étant ancrée dans les deux bourrelets (50) par un retournement autour d'une structure annulaire de renforcement (51) , de manière à former dans chaque bourrelet une partie principale (52) et un retournement (53);
une première couche (70) de mélange élastomérique de bourrage occupant un volume compris au moins en partie d'une part entre la partie principale de l'armature de carcasse (52), et d'autre part la portion radialement extérieure de structure annulaire de renforcement (51), et s'étendant radialement extérieurement jusqu' à une extrémité située à une distance normale DRB à la droite axiale (HH') tangente à la structure annulaire de renforcement en son point radialement le plus intérieur;
une deuxième couche de mélange élastomérique formant une couche latérale de renforcement (60) occupant un volume compris au moins en partie entre la couche de flanc (30), et le retournement de l'armature de carcasse (53), s' étendant radialement extérieurement jusqu' à une extrémité située à une distance normale DRL à la droite axiale (HH') tangente à la structure annulaire de renforcement (51) en son point radialement le plus intérieur;
un module de cisaillement élastique et une perte viscoélastique Tan (δ)max des mélanges élastomériques étant mesurées selon un mode opératoire particulier de la norme ASTM D 5992-96 comprenant un enregistrement de la réponse d'un échantillon de mélange élastomérique vulcanisé ayant la forme d'une éprouvette cylindrique de 4 mm d'épaisseur et de 400 mm² de section, soumis à une sollicitation sinusoïdale en cisaillement simple alterné, à la fréquence de 10Hz, à une température de 100°C et pour un déformation égale à 10% déterminée à partir d'un balayage en amplitude de déformation de 0,1% à 50% pour le cycle aller;
dans chaque bourrelet (50) une courbe de contact jante comprenant les points du pneumatique (1) en contact avec la jante (100); ladite courbe de contact jante reliant un premier point M1 du pneumatique axialement positionné le plus extérieurement, et en contact avec la jante, et un deuxième point M2 du pneumatique également en contact avec la jante et situé au milieu de la portion rectiligne reliant le crochet au siège de la jante; la longueur de ladite courbe de contact jante étant la distance curviligne du point M1 au point M2 le long de la courbe de contact jante ;
deux sections dans une coupe méridienne verticale du pneumatique gonflé, monté sur une jante, et écrasé sur un sol plan dur par une charge verticale (250) où la charge, la pression de gonflage, sont à leur valeur nominale de la norme l'ETRTO (Organisation Européenne Technique des Pneumatiques et des jantes) ; une première section étant située dans l'aire de contact, et une deuxième section étant située du côté opposé à la précédente par rapport à l'axe de rotation du pneumatique ;
dans la première section située dans l'aire de contact, dans au moins un premier bourrelet, la longueur de la courbe de contact jante, LADC, étant mesurée;
dans la deuxième section située à l'opposé de l'aire de contact par rapport à l'axe de rotation du pneumatique, dans au moins un deuxième bourrelet, la longueur de la courbe de contact jante, LCJ, étant mesurée, **caractérisé en ce que** le rapport de la différence des longueurs des courbes de contact jante des deux sections soit 100*(LADC-LCJ)/LCJ, est supérieur ou égal à 30, **en ce que** la perte viscoélastique Tan (δ)max du mélange élastomérique constituant la couche latérale de renforcement (60) d'au moins un bourrelet (50) a une valeur inférieure ou égale à 0.100.

2. Pneumatique (1) selon la revendication 1, **dans lequel** la couche latérale de renforcement (60) d'au moins un bourrelet (50) a un module de cisaillement élastique compris dans l'intervalle [1.5 ; 10] MPa, préférentiellement dans l'intervalle [1.5 ; 7]

3. Pneumatique (1) selon l'une des revendications précédentes, **dans lequel** le rapport de la différence des longueurs des courbes de contact jante des deux sections soit 100*(LADC-LCJ)/LCJ, est supérieur ou égal à 40, préférentiellement supérieur ou égal à 50%, encore préférentiellement supérieur ou égal à 70.

4. Pneumatique (1) selon l'une des revendications précédentes **dans lequel** la distance radiale DRB de la première couche de mélange élastomérique de bourrage (70) comprise entre la partie principale (52) de l'armature de carcasse (90) et de son retournement (53) est inférieure ou égale à 50% de la hauteur radiale H du pneumatique (1).

5. Pneumatique (1) selon l'une des revendications précédentes, la distance radiale DRI étant la hauteur radiale d'une extrémité radialement la plus intérieure de la couche latérale de renforcement (60) positionnée entre la couche de flanc (30) et le retournement (53) de l'armature de carcasse (90), **dans lequel** la distance radiale DRI est comprise dans l'intervalle [5% ; 20%] de la hauteur radiale H du pneumatique (1).

6. Pneumatique (1) selon l'une des revendications précédentes, la distance DRL étant la distance de l'extrémité radialement extérieure de la couche latérale de renforcement (60) positionnée entre la couche de flanc (30) et le retournement (53) de l'armature de carcasse (90), **dans lequel** ladite distance DRL est supérieure ou égale à 25% de la hauteur radiale H du pneumatique (1).

7. Pneumatique (1) selon l'une des revendications précédentes, **dans lequel** le retournement (53) de l'armature de carcasse (90) est en contact avec la partie principale (52) de l'armature de carcasse (90) radialement extérieurement le long dudit retournement (53).

8. Pneumatique (1) selon l'une des revendications précédentes **dans lequel** une armature de renforcement du bourrelet (50) est introduite axialement extérieurement entre le retournement (53) de l'armature de carasse (90), et la couche latérale de renforcement (60), axialement intérieure au flanc (30).

9. Pneumatique (1) selon l'une des revendications précédentes, dans lequel au moins une couche de la première couche de mélange élastomérique de bourrage (70) et de la couche latérale de renforcement (60) a une composition à base de 100% de polyisoprène de caoutchouc naturel, ou bien d'un coupage de caoutchouc naturel et de polybutadiène, d'un système de réticulation, d'une charge renforçante, type Noir de Carbone N550, à un taux global compris entre 50 et 75 pce.

10. Pneumatique (1) selon l'une des revendications précédentes, **dans lequel,** le mélange élastomérique constitutif de la couche de mélange élastomérique de bourrage (70) d'au moins un bourrelet (50) a la même composition que le mélange élastomérique constituant la couche latérale de renforcement (60) dudit bourrelet (50).

## Patentansprüche

1. Reifen (1) für einen Personenkraftwagen, umfassend:
zwei Wülste (50), die dazu bestimmt sind, auf einer Felge montiert zu werden, zwei Flankenlagen (30), die mit den Wülsten (50) verbunden sind, einen Gürtel (20), der einen Laufstreifen (10) aufweist, der dazu bestimmt ist, mit einem Boden (200) in Kontakt zu gelangen, wobei der Gürtel (20) eine erste Seite hat, die mit dem radial äußeren Ende der einen der beiden Flankenlagen (30) verbunden ist, und eine zweite Seite hat, die mit dem radial äußeren Ende der anderen der beiden Flankenlagen (30) verbunden ist;
mindestens eine Karkassenverstärkung (90), die sich von den beiden Wülsten (50) aus über die Flankenlagen (30) bis zu dem Gürtel (20) erstreckt, wobei die Karkassenverstärkung (90) eine Vielzahl von Karkassenfestigkeitselementen aufweist und in den beiden Wülsten (50) durch einen Umschlag um eine ringförmige Festigkeitsstruktur (51) herum verankert ist, so dass in jeder Wulst ein Hauptteil (52) und ein Umschlag (53) gebildet werden;
eine erste Fülllage (70) aus Elastomergemisch, die ein Volumen einnimmt, das mindestens zum Teil zum einen zwischen dem Hauptteil der Karkassenverstärkung (52) und zum anderen dem radial äußeren Abschnitt der ringförmigen Festigkeitsstruktur (51) liegt, und sich radial außen bis zu einem Ende erstreckt, das in einem zu der axialen Geraden (HH'), die die ringförmige Festigkeitsstruktur an ihrem radial innersten Punkt tangiert, senkrechten Abstand DRB gelegen ist;
eine zweite Lage aus Elastomergemisch, die eine seitliche Festigkeitslage (60) bildet, die ein Volumen einnimmt, das mindestens zum Teil zwischen der Flankenlage (30) und dem Umschlag der Karkassenverstärkung (53) liegt, wobei sie sich radial außen bis zu einem Ende erstreckt, das in einem zu der axialen Geraden (HH'), die die ringförmige Festigkeitsstruktur (51) an ihrem radial innersten Punkt tangiert, senkrechten Abstand DRL gelegen ist;
wobei ein elastischer Schermodul und ein viskoelastischer Verlustfaktor Tan (δ)max der Elastomergemische nach einer besonderen Vorgehensweise der Norm ASTM D 5992-96 gemessen werden, die eine Aufzeichnung der Antwort einer Probe aus vulkanisiertem Elastomergemisch mit der Form eines zylindrischen Probekörpers mit 4 mm Dicke und 400 mm² Querschnitt umfasst, die einer einfachen alternierenden sinusförmigen Scherbeanspruchung mit der Frequenz von 10 Hz bei einer Temperatur von 100 °C und bei einer Verformung von 10 % unterzogen wird, die ausgehend von einem Amplitudensweep mit einer Verformung von 0,1 % bis 50 % für den Hin-Zyklus bestimmt wird;
wobei in jeder Wulst (50) eine Felgenkontaktkurve die mit der Felge (100) in Kontakt stehenden Punkte des Reifens (1) umfasst; wobei die Felgenkontaktkurve einen ersten Punkt M1 des Reifens, der axial am weitesten außen angeordnet ist und in Kontakt mit der Felge ist, und einen zweiten Punkt M2 des Reifens, der ebenfalls in Kontakt mit der Felge ist und in der Mitte des das Horn mit dem Bett der Felge verbindenden geradlinigen Abschnitts gelegen ist, verbindet; wobei die Länge der Felgenkontaktkurve der krummlinige Abstand von dem Punkt M1 bis zu dem Punkt M2 entlang der Felgenkontaktkurve ist;
zwei Querschnitte in einem vertikalen Meridianschnitt des aufgepumpten, auf einer Felge montierten und auf einem harten ebenen Boden von einer vertikalen Last (250) zusammengedrückten Reifen, wobei die Last, der Fülldruck ihren Nennwert der Norm der ETRTO (European Tyre and Rim Technical Organisation) aufweisen; wobei ein erster Querschnitt in der Kontaktfläche gelegen ist und wobei ein zweiter Querschnitt auf der in Bezug auf die Rotationsachse des Reifens zu der vorhergehenden entgegengesetzten Seite gelegen ist;
wobei in dem in der Kontaktfläche gelegenen ersten Querschnitt in mindestens einer ersten Wulst die Länge der Felgenkontaktkurve, LADC, gemessen wird;
wobei in dem in Bezug auf die Rotationsachse des Reifens entgegengesetzt zu der Kontaktfläche gelegenen zweiten Querschnitt in mindestens einer zweiten Wulst die Länge der Felgenkontaktkurve, LCJ, gemessen wird, **dadurch gekennzeichnet, dass** das Verhältnis der Differenz der Längen der Felgenkontaktkurven der beiden Querschnitte, d. h. 100* (LADC-LCJ) /LCJ, größer oder gleich 30 ist, dass der viskoelastische Verlustfaktor Tan (δ)max des Elastomergemisches, aus dem die seitliche Festigkeitslage (60) mindestens einer Wulst (50) besteht, einen Wert kleiner oder gleich 0.100 hat.

2. Reifen (1) nach Anspruch 1, wobei die seitliche Festigkeitslage (60) mindestens einer Wulst (50) einen elastischen Schermodul hat, der in dem Intervall [1.5; 10] MPa, bevorzugt in dem Intervall [1.5; 7], liegt

3. Reifen (1) nach einem der vorhergehenden Ansprüche, wobei das Verhältnis der Differenz der Längen der Felgenkontaktkurven der beiden Querschnitte, d. h. 100* (LADC-LCJ)/LCJ, größer oder gleich 40, bevorzugt größer oder gleich 50 %, noch bevorzugter größer oder gleich 70 ist.

4. Reifen (1) nach einem der vorhergehenden Ansprüche, wobei der radiale Abstand DRB der ersten Fülllage aus Elastomergemisch (70) zwischen dem Hauptteil (52) der Karkassenverstärkung (90) und ihrem Umschlag (53) kleiner oder gleich 50 % der radialen Höhe H des Reifens (1) ist.

5. Reifen (1) nach einem der vorhergehenden Ansprüche, wobei der radiale Abstand DRI die radiale Höhe eines radial innersten Endes der seitlichen Festigkeitslage (60) ist, die zwischen der Flankenlage (30) und dem Umschlag (53) der Karkassenverstärkung (90) angeordnet ist, wobei der radiale Abstand DRI in dem Intervall [5 %; 20 %] der radialen Höhe H des Reifens (1) liegt.

6. Reifen (1) nach einem der vorhergehenden Ansprüche, wobei der Abstand DRL der Abstand des radial äußeren Endes der seitlichen Festigkeitslage (60) ist, die zwischen der Flankenlage (30) und dem Umschlag (53) der Karkassenverstärkung (90) angeordnet ist, wobei der Abstand DRL größer oder gleich 25 % der radialen Höhe H des Reifens (1) ist.

7. Reifen (1) nach einem der vorhergehenden Ansprüche, wobei der Umschlag (53) der Karkassenverstärkung (90) radial außen entlang des Umschlags (53) in Kontakt mit dem Hauptteil (52) der Karkassenverstärkung (90) ist.

8. Reifen (1) nach einem der vorhergehenden Ansprüche, wobei eine Festigkeitsverstärkung der Wulst (50) axial außen zwischen dem Umschlag (53) der Karkassenverstärkung (90) und der seitlichen Festigkeitslage (60), axial innerhalb der Flanke (30), eingefügt ist.

9. Reifen (1) nach einem der vorhergehenden Ansprüche, wobei mindestens eine Lage der ersten Fülllage aus Elastomergemisch (70) und der seitlichen Festigkeitslage (60) eine Zusammensetzung auf Basis von 100 % Naturkautschuk-Polyisopren oder aber eines Verschnitts aus Naturkautschuk und Polybutadien, eines Vernetzungssystems, eines verstärkenden Füllstoffs, Typ Ruß N550, mit einem Gesamtanteil zwischen 50 und 75 phr hat.

10. Reifen (1) nach einem der vorhergehenden Ansprüche, wobei das Elastomergemisch, aus dem die Fülllage aus Elastomergemisch (70) mindestens einer Wulst (50) besteht, die gleiche Zusammensetzung hat wie das Elastomergemisch, aus dem die seitliche Festigkeitslage (60) der Wulst (50) besteht.

## Claims

1. Tyre (1) for a passenger vehicle, comprising:
two beads (50) intended to be mounted on a rim, two sidewall layers (30) connected to the beads (50), and a crown (20) having a tread (10) intended to come into contact with the ground (200), the crown (20) having a first side connected to the radially outer end of one of the two sidewall layers (30) and a second side connected to the radially outer end of the other one of the two sidewall layers (30);
at least one carcass reinforcement (90) extending from the two beads (50) through the sidewall layers (30) as far as the crown (20), the carcass reinforcement (90) having a plurality of carcass reinforcing elements and being anchored in the two beads (50) by way of a turn-up around the annular reinforcing structure (51), so as to form a main part (52) and a turn-up (53) in each bead;
a first layer (70) of elastomeric filler compound taking up a volume which is comprised at least partially on the one hand between the main part of the carcass reinforcement (52), and on the other hand the radially outer portion of the annular reinforcing structure (51), and extending radially outwards to an end located at a normal distance DRB from the axial straight line (HH') which is tangent to the annular reinforcing structure at its radially innermost point;
a second layer (60) of elastomeric compound forming a lateral reinforcing layer (60) taking up a volume comprised at least partially between the sidewall layer (30) and the turn-up of the carcass reinforcement (53), and extending radially outwards to an end located at a normal distance DRL from the axial straight line HH' which is tangent to the annular reinforcing structure (51) at its radially innermost point;
the dynamic shear stiffness moduli and the viscoelastic loss Tanδ of the elastomeric compounds being measured in accordance with the standard ASTM D 5992-96, comprising the response of a sample of vulcanized elastomeric compound in the form of a cylindrical test specimen with a thickness of 4 mm and a cross section of 400 mm², subjected to a simple alternating sinusoidal shear stress, at a frequency of 10 Hz and at a temperature of 100°C and under 10% strain carried out from an amplitude sweep from 0.1% to 50% from the outward cycle;
in each bead (50), a rim contact curve comprising the points on the tyre (1) that are in contact with the rim (100); this rim contact curve connecting a first point M1 on the tyre that is positioned axially furthest on the outside, and in contact with the rim, and a second point M2 on the tyre that is also in contact with the rim and is located in the middle of the rectilinear portion connecting the flange to the seat of the rim; the length of this rim contact curve being the curvilinear distance from the point M1 to the point M2 along the contact curve;
two sections in a vertical meridian plane of the inflated tyre mounted on a rim and compressed against a hard flat ground, by a vertical load (250), wherein the load and the inflation pressure are at their nominal values from the ETRTO (European Tyre and Rim Technical Organization) standard; a first section being located in the contact patch, and a second section being located on the opposite side to the first in relation to the axis of rotation of the tyre;
in the first section located in the contact patch, in at least a first bead, the length of the rim contact curve, LADC, being measured;
in the second section located opposite the contact patch in relation to the axis of rotation of the tyre, in at least a second bead, the length of the rim contact curve, LCJ, being measured, **characterized in that** the ratio of the difference in the lengths of the rim contact curves of the two sections, i.e. 100*(LADC-LCJ)/LCJ, is greater than or equal to 30, and **in that** the viscoelastic loss Tan(δ)max of the elastomeric compound making up the second lateral reinforcing layer (60) of at least one bead (50) has a value less than or equal to 0.100.

2. Tyre (1) according to Claim 1, **wherein** the second lateral reinforcing layer (60) of at least one bead (50) has an elastic shear stiffness modulus that lies within the range [1.5 ; 10] MPa, preferably within the range [1.5 ; 7].

3. Tyre (1) according to one of the preceding claims, **wherein** the ratio of the difference in the lengths of the rim contact curves of the two sections, i.e. 100*(LADC-LCJ)/LCJ, is greater than or equal to 40, preferably greater than or equal to 50%, more preferably greater than or equal to 70.

4. Tyre (1) according to one of the preceding claims, **wherein** the radial distance DRB of the first filler layer (70) comprised between the main part (52) of the carcass reinforcement (90) and its turn-up (53) is less than or equal to 50% of the radial height H of the tyre (1).

5. Tyre (1) according to one of the preceding claims, the radial distance DRI being the radial height of a radially innermost end of the lateral reinforcing layer (60) positioned between the sidewall layer (30) and the turn-up (53) of the carcass reinforcement (90), **wherein** the radial distance DRI lies within the range [5% ; 20%] of the radial height H of the tyre (1).

6. Tyre (1) according to one of the preceding claims, the distance DRL being the distance of the radially outer end of the lateral reinforcing layer (60) positioned between the sidewall layer (30) and the turn-up (53) of the carcass reinforcement (90), **wherein** said distance DRL is greater than or equal to 25% of the radial height H of the tyre (1).

7. Tyre (1) according to one of the preceding claims, **wherein** the turn-up (53) of the carcass reinforcement (90) is in contact with the main part (52) of the carcass reinforcement (90) radially on the outside along said turn-up (53).

8. Tyre (1) according to one of the preceding claims, **wherein** a reinforcement of the bead (50) is introduced axially on the outside between the turn-up (53) of the carcass reinforcement (90) and the lateral reinforcing layer (60), axially on the inside of the sidewall (30).

9. Tyre (1) according to one of the preceding claims, wherein the elastomeric compound making up at least one layer of the first and the second layer (60, 70) of at least one bead (50) has a composition on the basis of 100% polyisoprene natural rubber, or else a blend of natural rubber and polybutadiene, a crosslinking system, a reinforcing filler of carbon black N550 type, at an overall content of between 50 and 75 phr.

10. Tyre (1) according to one of the preceding claims, **wherein** the elastomeric compound making up the filler layer (70) of at least one bead (50) has the same composition as the elastomeric.
